# FASCICULE DE BREVET EUROPEEN

(11) **EP 0 677 265 B1**
(45) Date de publication et mention de la délivrance du brevet: **08.10.1997**
(21) Numéro de dépôt: 95420102.6
(22) Date de dépôt: 14.04.1995
(51) Int. Cl.: A47J 37/00, F24C 7/08, A47J 27/62

(54) **Dispositif et procédé de commande pour appareil de cuisson**
Vorrichtung und Verfahren zum Regeln eines Kochgerätes
Device and method for controlling a cooking appliance

(30) Priorité: 15.04.1994 FR 9404819
(43) Date de publication de la demande: 18.10.1995
(73) Titulaire: SEB S.A., 69130 Ecully (FR)
(72) Inventeur: Normand, Catherine, F-68140 Munster (FR); Balandier, Jean-Marie, F-88400 Gerardmer (FR); Mauffrey, Guy, F-70280 Breuchotte (FR)

(56) Documents cités:
- DE-A- 2 023 242
- DE-A- 2 733 362
- DE-A- 3 701 308
- FR-A- 2 130 427
- FR-A- 2 260 917
- US-A- 3 827 345
- US-A- 3 889 875

## Description

La présente invention se rapporte aux domaines des appareils de cuisson dont le fonctionnement est réglable à l'avance en fonction des aliments qui y sont préparés. L'invention concerne plus particulièrement un dispositif de commande pour des appareils de cuisson du type, four électrique ou four à micro-ondes par exemple, utilisés notamment pour la cuisson et/ou le grillage de viandes. Il est évident que tout type d'appareil de cuisson peut être concerné par la présente invention et notamment des appareils destinés à la cuisson des frites, de pâtisseries, pizzas ou autres articles alimentaires.

Il est déjà connu dans l'art antérieur, par l'intermédiaire du document FR-A-2.260.917 et le document US-A-3 827 345 (voir le préambule des revendications 1 et 10) de réaliser des dispositifs de commande pour le rôtissage et notamment pour rôtir automatiquement de la viande tout en tenant compte du poids de cette dernière et/ou de sa nature dans un four électrique. Un tel dispositif associé en particulier à une minuterie et un ensemble de régulation thermique constitué de deux thermostats, permet d'obtenir différentes phases de cuisson, les deux thermostats étant réglés évidemment à des températures différentes. Un circuit électrique d'alimentation des éléments chauffants est conçu par ailleurs pour maintenir dans ledit circuit électrique l'un ou l'autre de ces thermostats en fonction de l'écoulement du temps de cuisson décompté sur la minuterie. Un dispositif de commande tel que décrit dans l'art antérieur présente l'inconvénient de ne pas tenir compte d'un nombre suffisant de paramètres pouvant être associés aux aliments destinés à la cuisson afin d'obtenir une cuisson optimale dans tous les cas de figures. En outre, le dispositif de commande connu est obtenu par l'utilisation, notamment, d'un deuxième thermostat, rendant ledit dispositif de commande, plus complexe à réaliser et par conséquent plus coûteux.

Il est également connu, pour améliorer la cuisson de différents types de viandes, de déterminer le temps de cuisson par un procédé dans lequel figure une étape consistant à effectuer une mesure d'épaisseur sur la pièce à cuire. Un tel procédé décrit dans le document FR-A-2.584.914 est complexe à mettre en oeuvre d'une part et ne permet pas de garantir un résultat de cuisson satisfaisant d'autre part.

L'objet de la présente invention consiste à remédier aux inconvénients présents dans l'art antérieur et à optimiser la cuisson d'un aliment quelconque sans avoir recours à une surveillance de la cuisson.

Un autre objet de l'invention consiste à déterminer une durée de cuisson optimale pour obtenir un résultat de cuisson satisfaisant quelles que soient les caractéristiques des aliments destinés à la cuisson, en tenant compte d'un nombre important de paramètres intervenant dans la cuisson pour garantir une cuisson optimale.

Un objet supplémentaire de la présente invention vise à utiliser des moyens extrêmement simples et peu coûteux pour réaliser un dispositif de commande adapté à tous types d'appareils de cuisson.

Les buts assignés à la présente invention sont atteints à l'aide d'un procédé pour déterminer la durée et la température de cuisson d'un article alimentaire, consistant à sélectionner des paramètres représentatifs de la nature de l'article et du degré de cuisson désiré et à utiliser un paramètre représentatif du poids de l'article, caractérisé en ce qu'il consiste à partir d'un ensemble N de courbes représentatives du temps de cuisson en fonction du poids de l'article, ledit ensemble N comportant des sous-ensembles de courbes associés à la nature, à la configuration et au degré de cuisson de l'article,
- à sélectionner à partir de l'ensemble N un premier sous-ensemble x de courbes relatives à la nature de l'article,
- à sélectionner à partir du premier sous-ensemble x un second sous-ensemble y de courbes relatives à la configuration de l'article,
- à sélectionner à partir du second sous-ensemble y, la courbe c relative au degré de cuisson désiré,
- à déterminer la durée de cuisson par l'intermédiaire de la correspondance entre une valeur de poids et un temps, ladite correspondance étant donnée par la courbe c préalablement sélectionnée.

Les buts assignés à la présente invention sont également atteints à l'aide d'un dispositif de commande d'un appareil de cuisson d'articles alimentaires pour la mise en oeuvre du procédé conforme à l'une des revendications 1 à 9 comportant un premier organe de commande pour sélectionner des paramètres représentatifs de la nature, du degré de cuisson désiré et d'un paramètre associé à la configuration des articles, un deuxième organe de commande, pour sélectionner le poids des articles d'une part, ledit deuxième organe de commande étant associé à des moyens pour obtenir un réglage d'une minuterie pilotant l'alimentation électrique d'éléments chauffants agencés dans l'appareil de cuisson d'autre part, ledit dispositif comportant également un moyen d'affichage d'informations relatives aux paramètres sélectionnés des articles.

Les caractéristiques et les avantages de l'invention ressortiront mieux à la lecture de la description donnée ci-après, en référence aux dessins annexés donnés à titre d'exemples non limitatifs dans lesquels :
- la figure 1 représente une vue de face d'un exemple de réalisation d'un dispositif de commande conforme à l'invention,
- la figure 1a représente un détail de la figure 1 conforme à la présente invention,
- la figure 1b représente des courbes représentatives du temps de cuisson en fonction du poids des articles et des degrés de cuisson, conformément à l'invention,
- la figure 1c représente des courbes représentatives du temps de cuisson en fonction du poids et du diamètre des articles.
- la figure 1d représente un tableau de valeurs de temps de cuisson déterminées conformément à l'invention,
- la figure 1e représente un autre exemple d'un tableau de valeurs de temps de cuisson déterminées conformément à l'invention,
- la figure 2 représente une vue latérale en coupe du dispositif conforme à l'invention selon une ligne A-A de la figure 1a,
- la figure 3 représente une vue en coupe du dispositif conforme à l'invention, selon une ligne B-B de la figure 2.
- la figure 4 représente un exemple de réalisation d'un organe de commande du dispositif conforme à la présente invention.

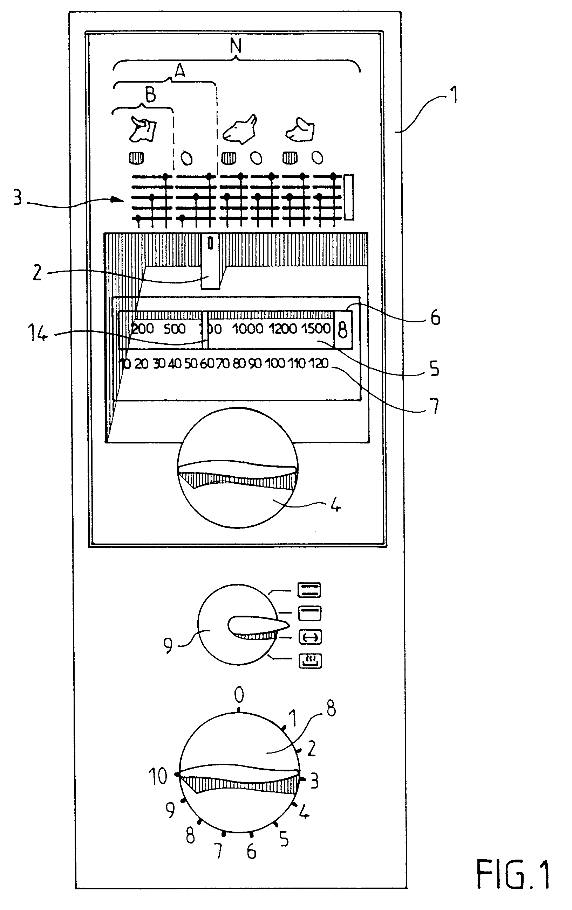

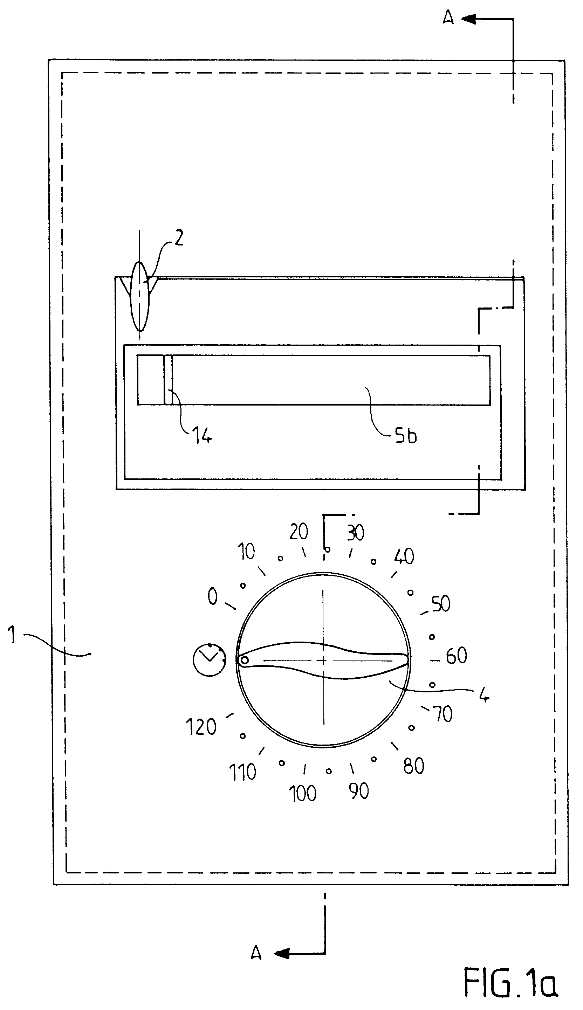

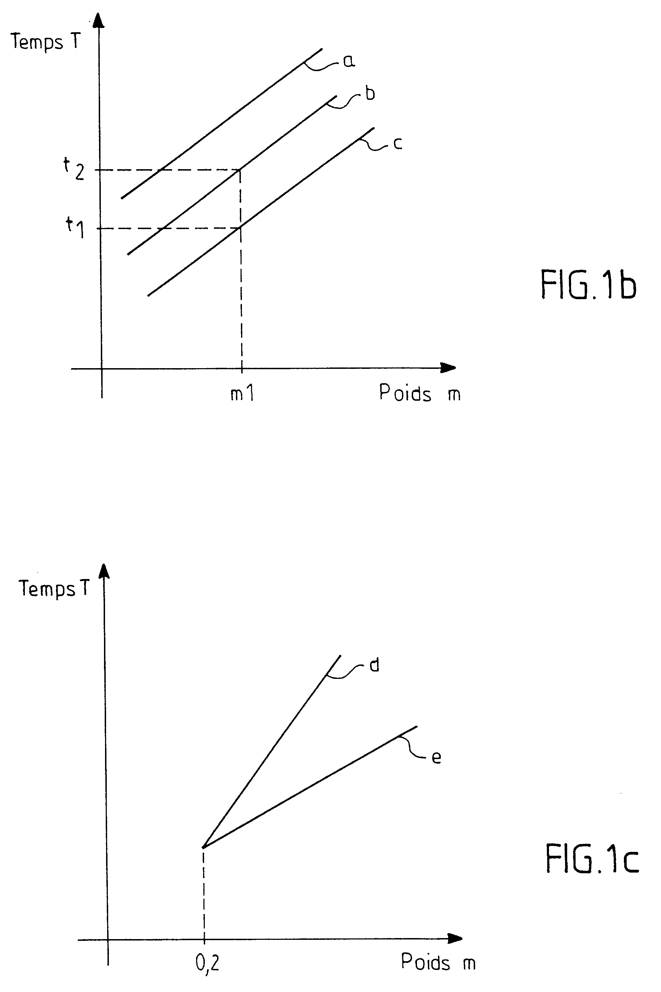

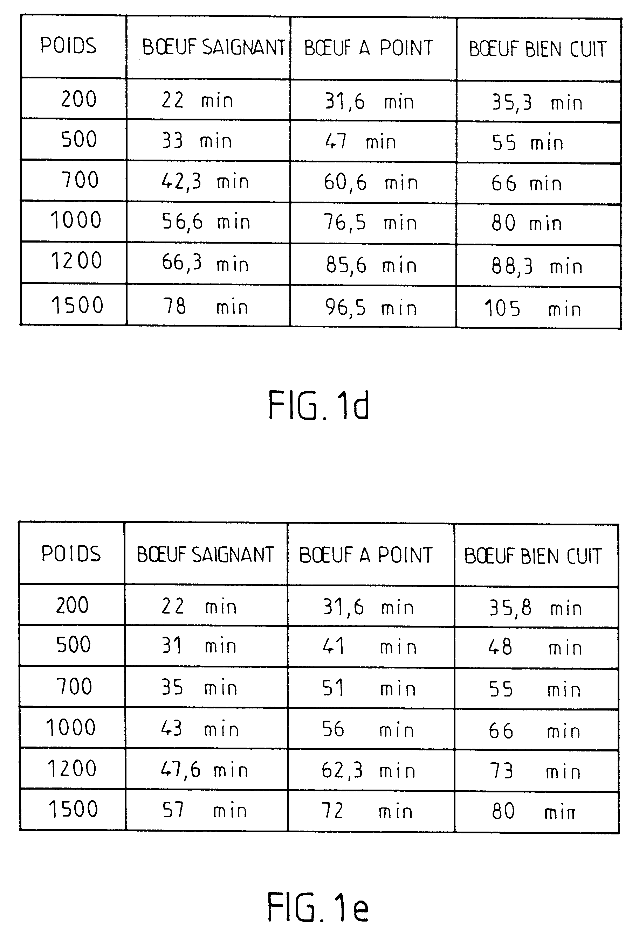

La figure 1 représente un dispositif de commande conforme à l'invention selon une vue de face. Le dispositif de commande est constitué d'un bâti 1 sur lequel sont indiqués ou imprimés un repère paramètré 3 et une échelle des temps 7.

Le dispositif de commande comporte un premier organe de commande 2 permettant d'une part de sélectionner au moins une partie des paramètres intervenants dans le fonctionnement d'un four par exemple et répertoriés sur le repère paramètré 3. Le premier organe de commande 2 peut ainsi être disposé en face des paramètres sélectionnés sur le repère paramètré 3. Ce dernier comporte autant de positions pour le premier organe de commande 2 qu'il existe de paramètres ou programmes pouvant être sélectionnés. Un tel programme représente une combinaison de plusieurs paramètres sélectionnés. Le premier organe de commande 2 permet également d'afficher des paramètres complémentaires dépendant de la sélection effectuée par ledit premier organe de commande 2. Le dispositif de commande comporte également un deuxième organe de commande 4 permettant d'une part de sélectionner au moins une partie des paramètres complémentaires et d'autre part de procéder au réglage d'une minuterie 20. Le dispositif est donc constitué d'un bâti 1 sur lequel figure un repère paramètré 3 présentant des informations sur la nature, la configuration et le degré de cuisson optimal des articles, d'un support mobile sur lequel sont imprimées des échelles de valeurs 5 de poids, l'une desdites échelles de valeurs 5 étant sélectionnée par le premier organe de commande 2 et affichée par le moyen d'affichage 5b. Ainsi le dispositif de commande conforme à l'invention est constitué d'un bâti 1 sur lequel sont imprimés au moins une partie des paramètres, d'un support mobile sur lequel sont imprimés au moins une partie des paramètres complémentaires et d'un système mécanique de synchronisation entre le support mobile et le premier organe de commande 2 pour afficher par l'intermédiaire d'un moyen d'affichage 5b les paramètres complémentaires en concordance avec les paramètres sélectionnés par le premier organe de commande 2. Le support mobile comporte des échelles de valeurs 5 représentatives des paramètres complémentaires. Préférentiellement le moyen d'affichage 5b est constitué d'une fenêtre d'affichage ménagée dans le bâti 1 et le support mobile est constitué du tambour 5a cylindrique disposé en regard du moyen d'affichage 5b et monté sur l'axe de rotation 5c. Le tambour 5a est par exemple solidaire de l'axe de rotation 5c. Le système mécanique de synchronisation est constitué d'au moins une pièce mécanique de liaison transmettant un mouvement du premier organe de commande 2 au support mobile pour afficher les paramètres complémentaires. Le système mécanique de synchronisation permet donc de transmettre le mouvement du premier organe de commande 2 au support mobile pour afficher l'échelle de valeurs 5 de poids correspondant à la sélection effectuée sur le repère paramètré 3.

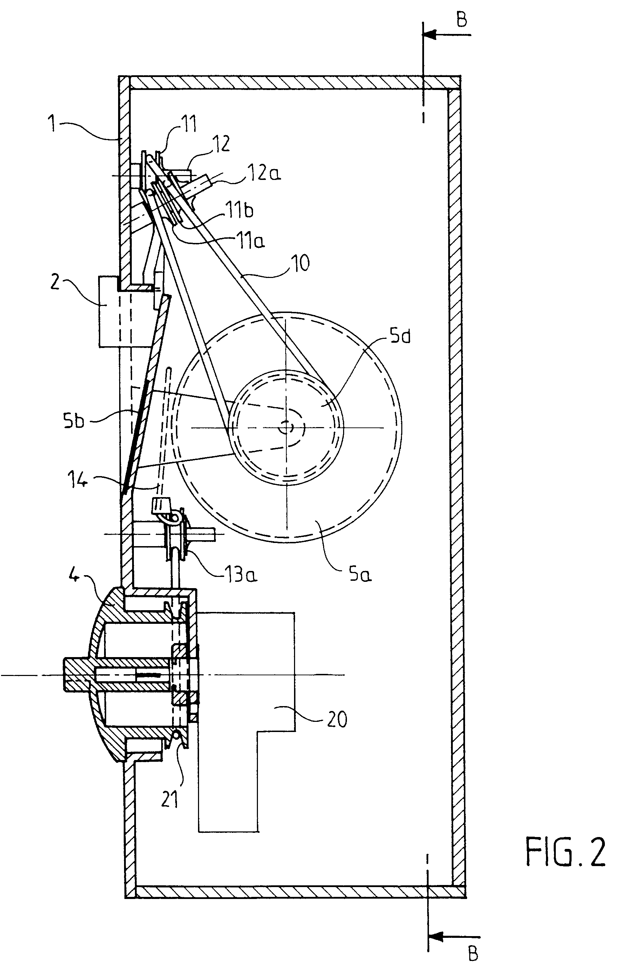

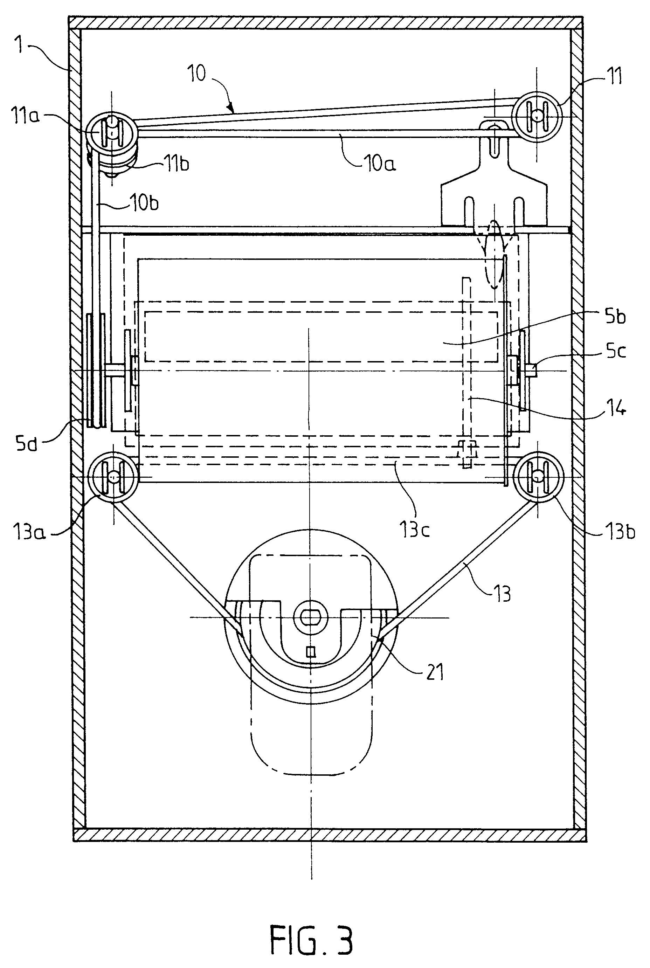

La pièce mécanique de liaison est avantageusement constituée d'une courroie 10 torique ou plate. Selon une variante de réalisation du dispositif de commande représenté aux figures 2 et 3, la pièce mécanique de liaison peut également être constituée d'une bande perforée ou d'un simple fil. De manière avantageuse, le système mécanique de synchronisation est constitué d'une première poulie 5d solidaire du tambour 5a et centrée sur l'axe de rotation 5c du tambour 5a, d'au moins un moyen de renvoi additionnel 11 agencée sur le bâti 1 et d'une courroie 10 montée sur la première poulie 5d et sur le moyen de renvoi additionnel 11 pour générer un mouvement de rotation de la première poulie 5d par une action sur le premier organe de commande 2. Le moyen de renvoi additionnel 11 est constitué par exemple d'une poulie. Le premier organe de commande 2 est réalisé par exemple par un disque solidaire de ce moyen de renvoi additionnel 11 ou de la première poulie 5d et fait saillie au moins partiellement hors du bâti 1 de manière à être accessible par l'utilisateur. La première poulie 5d est solidaire du tambour 5a directement ou indirectement par l'intermédiaire de l'axe de rotation 5c.

Selon une variante de réalisation préférentielle, du système mécanique de synchronisation représenté aux figures 2 et 3, ce dernier comporte des moyens de renvoi 11a, 11b, de manière à permettre un montage de la courroie 10 sur la première poulie 5d, sur le moyen de renvoi additionnel 11 et sur les moyens de renvoi 11a, 11b selon deux directions sensiblement perpendiculaires à l'intérieur du bâti 1.

Les moyens de renvoi 11a et 11b, de même que le moyen de renvoi additionnel 11 peuvent avantageusement être remplacés par des nervures, obtenues par moulage, dans le bâti 1 lorsque la courroie 10 utilisée est réalisée en un matériau glissant tel qu'un fil en nylon par exemple.

Une portion 10a de la courroie 10 s'étend selon une direction sensiblement horizontale entre le moyen de renvoi 11a et le moyen de renvoi additionnel 11 et une autre portion 10b s'étend selon une direction sensiblement verticale entre la première poulie 5d et le moyen de renvoi 11a par exemple.

La courroie 10 est donc montée sur la première poulie 5d et s'étend selon une direction verticale vers les moyens de renvoi 11a, 11b. En aval des moyens de renvoi 11a, 11b, la courroie 10 s'étend selon une direction horizontale vers le moyen de renvoi additionnel 11 sur laquelle elle est montée.

Les moyens de renvoi 11a ou 11b sont par exemple constitués de poulies montées sur des segments d'axe 12, 12a solidaires du bâti 1. Un tel montage permet de transmettre un mouvement de rotation au tambour 5a constituant le support mobile par l'intermédiaire d'une action sur la portion horizontale 10a ou sur la portion verticale 10b de la courroie 10.

Le premier organe de commande 2 est avantageusement fixé sur la portion 10a horizontale de la courroie 10 d'une part et débouche à l'extérieur du bâti 1 de manière à être actionné ou déplacé le long du repère paramétré 3. Une sélection de divers paramètres sur ce repère paramétré 3 par une translation du premier organe de commande 2 transmet ainsi un mouvement de rotation au tambour 5a cylindrique constituant le support mobile par l'intermédiaire d'un mouvement de translation horizontal de la portion 10a et d'un mouvement de translation vertical de la portion 10b de la courroie 10.

Le moyen d'affichage 5b constitué par exemple d'une fenêtre rectangulaire ménagée dans le bâti 1, est disposé en regard du tambour 5a cylindrique pour afficher une échelle de valeurs 5 représentant les paramètres complémentaires, lesquels sont directement dépendant de la sélection effectuée sur le repère paramètré 3 avec le premier organe de commande 2.

Une telle conception permet notamment d'utiliser un repère paramètré 3 qui s'étend sur une longueur sensiblement égale à l'étendue de la portion horizontale 10a.

Selon une autre variante de réalisation du dispositif de commande conforme à l'invention, le système mécanique de synchronisation est constitué d'une pièce cylindrique solidaire du support mobile et centrée sur l'axe de rotation 5c. La pièce cylindrique comporte une gorge hélicoïdale dans laquelle vient se déplacer une tige rigide fixée sur le premier organe de commande 2 pour animer ladite pièce cylindrique d'un mouvement de rotation lorsque le premier organe de commande 2 est déplacé par translation. La pièce cylindrique non représentée aux figures est montée sur l'axe 5c dans le prolongement du tambour 5a.

Une action sur le premier organe de commande 2 permet ainsi de transmettre un mouvement de rotation au tambour 5a à partir d'une translation de la tige rigide dont une extrémité pénètre dans la gorge hélicoïdale.

Le dispositif de commande conforme à l'invention comporte également un repère 14 se déplaçant le long du moyen d'affichage 5b pour procéder à une sélection parmi les paramètres complémentaires affichés. En outre le déplacement du repère 14 et le réglage de la minuterie 20 est effectué simultanément avec le deuxième organe de commande 4 par l'intermédiaire des pièces mécaniques de transmission.

Le repère 14 est donc déplaçable sur l'échelle de valeurs 5 de poids affichée. Le repère 14 est déplacé par l'intermédiaire du deuxième organe de commande 4 pour sélectionner le poids de l'article.

Avantageusement le moyen d'affichage 5b est constitué d'une fenêtre rectangulaire et les pièces mécaniques de transmission sont constituées d'une courroie de réglage 13 montée d'une part sur une poulie de réglage 21 de la minuterie 20 et d'autre part sur des moyens de guidage 13a et 13b pour obtenir un parallélisme entre la fenêtre constituant le moyen d'affichage 5b et une partie 13c de la courroie de réglage 13. Les moyens de guidage 13a et 13b sont constitués par exemple de poulies de guidage. Le repère 14 déplaçable est fixé sur la partie 13c pour se déplacer par translation le long de la fenêtre rectangulaire constituant le moyen d'affichage 5b lorsque le deuxième organe de commande 4 est actionné.

Le deuxième organe de commande 4 permet donc d'une part de sélectionner au moins une partie des paramètres complémentaires et d'autre part de procéder au réglage de la minuterie 20. Un tel réglage permet par exemple de mettre en route le four automatiquement, et le retour à zéro de la minuterie 20 permet de couper automatiquement le fonctionnement dudit four.

En outre le tambour 5a cylindrique constituant le support mobile contient autant d'échelles de valeurs 5 qu'il existe de programmes ou de combinaisons de paramètres ou de paramètres pouvant être sélectionnés sur le repère paramètré 3. La sélection d'un paramètre sur le repère paramètré 3 et par conséquent l'affichage d'une échelle de valeurs 5 correspond ainsi à une sélection d'un programme de cuisson. Lorsque le temps de fonctionnement programmé sur la minuterie 20 est décompté, le repère 14 et le deuxième organe de commande 4 se retrouvent dans leurs positions initiales respectives. Un nouveau réglage peut instantanément être entrepris. Le réglage de la minuterie 20 est obtenu par une échelle des temps 7 disposée autour du deuxième organe de commande 4.

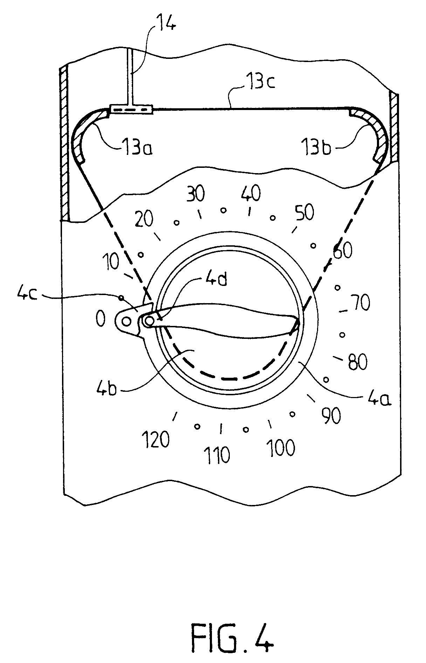

Selon une variante supplémentaire du dispositif de commande conforme à l'invention, le deuxième organe de commande 4 est constitué en deux parties représentées à la figure 4 et montées mobiles l'une par rapport à l'autre sur un même axe de rotation. La première partie est constituée d'un anneau 4a pour procéder au déplacement du repère 14. L'anneau 4a permet par conséquent de procéder à la sélection des paramètres complémentaires.

L'anneau 4a comporte également une butée 4c contre laquelle vient se bloquer la deuxième partie constituée d'un bouton 4b qui présente un ergot 4d venant en surplomb sur l'anneau 4a. La course du bouton 4b, lequel est mobile par rotation, permet ainsi de procéder au réglage de la minuterie 20 conformément au temps indiqué sur l'échelle des temps 7 par le repère 14 par l'intermédiaire du positionnement de la butée 4c. Les paramètres complémentaires sont donc sélectionnés avec l'anneau 4a. L'échelle des temps 7 et/ou une indication temporelle disposée autour du deuxième organe de commande 4 de manière circulaire remplissent uniquement une fonction d'information. En effet, le préréglage par l'anneau 4a délimite la course du bouton 4b de la minuterie 20 correspondant au déplacement du repère 14. L'utilisateur peut ainsi procéder au réglage de la minuterie 20 par une action sur le bouton 4b. Ce dernier se trouve mis en appui en fin de course par l'ergot 4d venant contre la butée 4c.

La correspondance entre le déplacement par translation du repère 14 et du réglage par rotation de la minuterie 20 est obtenue de manière connue par une simple transposition d'un déplacement linéaire en un déplacement circulaire. Ainsi lors de l'écoulement du temps de fonctionnement de l'appareil, l'anneau 4a de même que le repère 14 restent en position pour éviter les frottements générés par un éventuel entraînement du repère 14 par la poulie de réglage 21 de la minuterie 20. Ainsi le bouton 4b solidaire de la poulie de réglage 21 est l'unique moyen entraîné par la minuterie 20 lors du décomptage du temps. Les frottements entre l'anneau 4a et le bouton 4b sont minimisés par tous moyens connus. Le temps de fonctionnement initial affiché et/ou programmé n'est donc pas altéré et reste visible pour l'utilisateur de même que le temps qui reste à décompter.

Le dispositif conforme à l'invention permet notamment de piloter ou de gérer le temps de cuisson d'un four électrique ou à micro-ondes en fonction de paramètres représentatifs d'articles alimentaires. Le dispositif de commande est monté préférentiellement sur un appareil de cuisson d'articles alimentaires pour lesquels la nature, la configuration et le degré de cuisson désiré sont représentés par les paramètres, la température de cuisson et le poids desdits articles alimentaires étant représentés par les paramètres complémentaires. La puissance micro-onde peut également faire partie des paramètres complémentaires.

Un fonctionnement préférentiel du dispositif de commande conforme à l'invention est décrit dans ce qui suit. L'utilisateur sélectionne par l'intermédiaire du premier organe de commande 2, un certain nombre de paramètres parmi ceux présentés sur le repère paramètré 3. L'affichage d'une échelle de valeurs 5 dans le moyen d'affichage 5b, permet à l'utilisateur du dispositif de faire une sélection de paramètres complémentaires présentés ou indiqués sur l'échelle de valeurs 5 par l'intermédiaire du deuxième organe de commande 4 et du repère 14 qui lui est associé.

Le réglage de la minuterie 20 se fait simultanément ou de manière indépendante. Un réglage indépendant de la minuterie 20 selon une variante additionnelle du dispositif conforme à l'invention, est possible lorsque le deuxième organe de commande 4 est découplé de la minuterie 20 et que le réglage adéquat de ladite minuterie 20 est obtenu par une lecture directe du temps de cuisson repéré sur l'échelle des temps 7, ladite échelle des temps 7 figurant au voisinage de l'échelle de valeurs 5. L'utilisateur peut ainsi procéder au réglage de la minuterie 20 de façon totalement indépendante avec le deuxième organe de commande 4 en fonction du temps lu sur l'échelle des temps 7 d'une part et figurant en regard du poids de l'article de l'échelle de valeurs 5. Le positionnement du repère 14 n'est par conséquent plus indispensable. La minuterie 20 est de cette manière reliée uniquement aux éléments chauffants électriques avec des moyens mécaniques ou électroniques connus.

Le dispositif conforme à l'invention comporte également un moyen de réglage 8 de la température de cuisson des articles. Le dispositif conforme à l'invention est par exemple monté sur un four à convection forcée ou à convection naturelle.

Dans une application relative à un four, le réglage d'une température de fonctionnement optimale est obtenu par l'intermédiaire d'un thermostat réglable constituant le moyen de réglage 8 dont la position de réglage est donnée par une indication figurant sur l'échelle de valeur 5.

Dans une application relative à un four à micro-ondes le moyen de réglage de la température est remplacé par un moyen de réglage de la puissance micro-onde. Un four combiné avec des modes de fonctionnement différents est également envisageable dans une application supplémentaire. Ainsi pour un four combiné l'utilisateur dispose d'un réglage de la température et de la puissance micro-onde.

La figure 1 représente une vue de face du dispositif de commande et de mise en oeuvre du procédé pour déterminer la durée et/ou la température de cuisson d'articles alimentaires conformément à la présente invention. La figure 1 permet également de visualiser les différentes étapes du procédé conformes à l'invention. Ce dernier consiste à sélectionner les paramètres représentatifs de la nature, du degré de cuisson désiré et du poids des articles. Dans la description détaillée des différents paramètres il sera fait allusion plus spécialement à la cuisson de viandes mais la présente invention ne se limite nullement à ce type de cuisson. Tout article alimentaire peut être concerné par la présente invention.

Le degré de cuisson est défini comme l'état final de l'article après la cuisson. Le degré de cuisson est établi en fonction de la couleur et de la texture de l'article cuit.

Le procédé conforme à l'invention consiste à établir un ensemble N de courbes représentatives du temps de cuisson en fonction du poids de l'article, ledit ensemble N étant lié aux paramètres susceptibles d'intervenir dans la durée de cuisson et figurant sur le repère paramétré 3. Le procédé consiste également en plusieurs étapes successives ou simultanés qui sont : une sélection d'un premier sous-ensemble x de courbes relatives à la nature de l'article, une sélection parmi le premier sous-ensemble x de courbes, d'un second sous-ensemble y de courbes relatives à une configuration de l'article, une sélection parmi le second sous-ensemble y de courbes, de la courbe c relative au degré de cuisson désiré et représentée par exemple à la figure 1b, et finalement une détermination de la durée de cuisson par l'intermédiaire de la correspondance entre l'échelle de valeur 5 et l'échelle des temps 7, ladite correspondance étant donnée par la courbe c préalablement sélectionnée.

L'étape consistant à sélectionner la nature de l'article consiste à faire un choix parmi au moins des catégories correspondant à de la viande de boeuf, de porc, d'agneau, de poulet et de veau ou à des pâtisseries pour obtenir un premier sous-ensemble x de courbes.

La nature des articles alimentaires peut se rapporter soit totalement, soit partiellement à la composition ou à la constitution desdits articles alimentaires.

L'étape consistant à sélectionner un paramètre de configuration consiste à choisir parmi le premier sous-ensemble x de courbes un second sous-ensemble y formant un sous-groupe de courbes relatives à la configuration de l'article lesquelles correspondent au moins à des articles de forme plutôt carrée et à des articles de forme plutôt allongée ou bien à des articles avec ou sans os.

Les paramètres de configuration peuvent se rapporter également à la nature ou à la forme du plat ou du moule, supportant ou contenant les articles alimentaires.

L'étape consistant à sélectionner le degré de cuisson désiré consiste à faire un choix parmi les degrés de cuisson correspondant à une cuisson saignante, à point et bien cuite pour obtenir la courbe c représentative de la durée de cuisson en fonction du poids de l'article. Une étape complémentaire consiste à procéder au réglage de la durée de cuisson en fonction du poids de l'article et de la courbe c sélectionnée.

Tous ces paramètres ne sont pas forcément accessibles pour des viandes de nature différente. Il en est ainsi pour les viandes de porc, de veau et les volailles pour lesquelles uniquement une cuisson désignée par "bien cuit" est susceptible d'être sélectionnée. Ce sont en général des raisons microbiologiques qui imposent un degré de cuisson "bien cuit" pour certains articles. Dans un tel cas de figure le nombre de courbes sélectionnées se réduit ainsi à un et la courbe correspondante représente la courbe C représentative de la durée de cuisson en fonction du poids de l'article.

Il en est de même pour les articles alimentaires du type pâtisseries ou pizzas, pour lesquels seul le degré de cuisson, dit cuit, est acceptable.

Le procédé conforme à la présente invention consiste également à sélectionner un paramètre associé à la configuration des articles. En effet les articles, et notamment les viandes, peuvent présenter une configuration différente. Il est donc possible avec le procédé conforme à la présente invention de faire une sélection parmi les paramètres associés à la morphologie ou à des caractéristiques dimensionnelles des articles ou bien parmi des paramètres prenant en compte la constitution des différents articles. De cette manière on peut associer à chaque article de nature différente, divers degrés de cuisson et différentes configurations.

La sélection de ces paramètres est obtenue à l'aide du repère paramètré 3 représenté à la figure 1 et représentatif de n'importe quel article à cuire. Les différentes sélections se font par le premier organe de commande 2 agencé sur le dispositif de commande.

Le premier organe de commande 2 permet donc de sélectionner une combinaison de paramètres représentatifs de l'article à cuire, ou un programme de cuisson représentatif de l'article à cuire. Ainsi chaque position du premier organe de commande 2 ou chaque repèrage sur le repère paramètré 3 correspond à un programme de cuisson et tout programme de cuisson pris individuellement tient compte d'une combinaison de paramètres de cuisson qui sont, la nature, le degré de cuisson et la configuration de l'article.
Le repère paramètré 3 matérialise de cette façon un sélecteur de programmes de cuisson.

Selon un exemple de mise en oeuvre du procédé conforme à l'invention, la sélection d'un paramètre de cuisson correspondant à la nature des articles alimentaires est effectuée, à titre d'exemple, parmi les qualifications du type pizza, quiche, tarte salée, tarte, brioche, génoise ou cake ou du type garniture humide, peu humide ou liquide suivant la nature des garnitures, pour des tartes notamment.

Le paramètre correspondant au degré de cuisson est par exemple remplacé par un paramètre d'état initial, du type frais ou surgelé.

En outre, le paramètre de configuration peut correspondre par exemple à un plat métallique, à un plat en verre ou à un plat en céramique ou à des moules réalisés avec des matériaux identiques ou similaires. La forme des plats ou moules peut également intervenir.

Les paramètres complémentaires se rapportent au poids des articles alimentaires ou bien à titre de variante au nombre de personnes pour lesquelles sont prévus lesdits articles alimentaires.

Selon une variante du procédé conforme à l'invention, l'étape consistant à sélectionner un paramètre associé à la configuration des articles correspond à une sélection d'un paramètre associé à une comparaison de deux valeurs dimensionnelles d'épaisseur des articles. Il est ainsi envisageable de sélectionner un paramètre associé à une différence entre une valeur dimensionnelle de longueur et une valeur dimensionnelle d'épaisseur des articles. La valeur dimensionnelle de longueur peut dans ce cas de figure représenter une longueur ou une largeur.

Dans une autre variante, une étape supplémentaire du procédé conforme à l'invention consiste à sélectionner un paramètre associé à un rapport entre une valeur dimensionnelle de longueur et une valeur dimensionnelle de diamètre des articles. Une telle étape peut être avantageusement mise en oeuvre par une appréciation visuelle de la morphologie ou de la configuration desdits articles. Il est ainsi possible de faire la distinction entre des paramètres représentatifs des articles du type "petit diamètre et grande longueur", ou "gros diamètre et petite longueur".

Selon une variante préférentielle du procédé conforme à la présente invention, le paramètre associé à la configuration des articles est un paramètre qui prend en considération la forme ou morphologie générale desdits articles. Le paramètre associé à la configuration des articles est ainsi qualifié de deux manières différentes. La première qualification dudit paramètre correspond, pour l'exemple de la viande de boeuf, à un article plutôt carré et la seconde qualification dudit paramètre correspond, également pour l'exemple de la viande de boeuf, à un article plutôt allongé. L'utilisateur peut ainsi sélectionner par exemple entre des paramètres associés à la configuration des articles présentant soit une forme plutôt carrée, soit une forme plutôt allongée. Une telle distinction visuelle présente une extrême simplicité et permet d'améliorer la précision du temps de cuisson. Un article de forme plutôt allongée présente une longueur supérieure à la largeur ou à l'épaisseur.

D'autres caractéristiques dimensionnelles ou de configurations sont bien évidemment envisageables pour caractériser les articles et notamment une caractéristique de configuration qui consiste à faire la distinction entre la présence ou l'absence d'os dans les articles. Une configuration tenant compte de la constitution des articles et notamment la présence ou l'absence d'os peut être avantageuse pour la cuisson de la viande d'agneau ou de porc notamment. Une telle étape consiste donc à sélectionner un second sous-ensemble y de courbes formant un sous-groupe de configuration tenant compte de la présence d'os dans l'article.

Le procédé conforme à l'invention consiste également à afficher l'échelle de valeurs 5 de poids des articles de manière à pouvoir sélectionner le poids des articles par l'intermédiaire du deuxième organe de commande 4. Le procédé consiste donc notamment à matérialiser sur un support physique et à afficher l'échelle des valeurs 5 de poids en regard de l'échelle des temps 7. Selon une variante avantageuse du procédé conforme à l'invention, ce dernier comporte une étape consistant à sélectionner le poids des articles et à procéder au réglage de la durée de cuisson simultanément. L'échelle de valeurs 5 comporte une graduation susceptible de changer en fonction d'une variation de l'un au moins des paramètres représentatifs des articles. Ainsi l'étape consistant à sélectionner la nature, le degré de cuisson désiré et la configuration des articles, permet également de sélectionner automatiquement une échelle de valeurs 5 de poids des articles, laquelle est affichée d'une part et est constituée d'une graduation qui tient compte de ladite nature, dudit degré de cuisson et de ladite configuration des articles. Les graduations de l'échelle de valeurs 5 de poids présente une incrémentation préférentielle de 0,1 kg pour s'approcher de manière satisfaisante du poids des articles et pour garantir un bon résultat de cuisson.

De manière avantageuse le dispositif comporte l'échelle des temps 7 dont les graduations sont en regard de l'échelle de valeurs 5 de poids affichée. Les échelles de valeurs 5 de poids sont affichées de manière à ce que chaque valeur de poids est en regard avec une valeur de temps figurant sur l'échelle des temps 7, pour déterminer ainsi la durée de cuisson des articles en fonction des paramètres sélectionnés. La correspondance entre l'échelle de valeurs 5 de poids et l'échelle des temps 7 est déterminée expérimentalement à l'aide de courbes représentant le temps de cuisson en fonction du poids des articles et ceci à chaque fois que l'on fait varier un paramètre représentatif des articles.

De manière préférentielle le dispositif de commande comporte autant d'échelles de valeurs 5 de poids qu'il existe de courbes représentant une durée de cuisson en fonction du poids des articles, lesdites courbes étant représentées aux figures 1b et 1c et pouvant également être assimilées à des programmes. De cette manière la graduation sur l'échelle de valeurs 5 de poids représentant le poids d'un article est en regard d'un temps de cuisson sur l'échelle des temps 7. La variation de l'un des paramètres représentatif de la nature, du degré de cuisson ou de la configuration des articles change la position de la graduation représentant le poids de l'article et permet ainsi de connaître le temps de cuisson idéal et corriger en fonction de ladite variation et de procéder au réglage de ce dernier afin de garantir un résultat de cuisson satisfaisant.

Les figures 1b et 1c représentent les temps de cuisson en fonction du poids ou de la masse des articles en tenant compte d'un certain nombre de paramètres pouvant être associés à la viande de boeuf. De manière empirique il est possible de tracer des courbes représentatives d'une cuisson optimale en fonction d'un certain nombres de paramètres. A ce titre, la figure 1b représente des courbes représentatives a, b et c, du temps de cuisson en fonction du poids des articles et des degrés de cuisson, et la figure 1c représente des courbes représentatives d et e, du temps de cuisson en fonction du poids et du diamètre des articles.

La figure 1b représente un ensemble de trois courbes assimilables à trois droites parallèles a, b et c qui correspondent respectivement à des degrés de cuissons différents. On obtient une droite a pour un article bien cuit, une droite b pour un article cuit "à point", et une droite c pour un article "saignant". La figure 1b est représentative d'une cuisson d'un article présentant un gros diamètre ou une forme plutôt carrée.

La figure 1c représente le temps de cuisson en fonction du poids des articles en tenant compte du diamètre desdits articles. De manière empirique, on s'aperçoit que la pente des droites représentatives du temps de cuisson en fonction de la masse des articles, ne dépend que du diamètre desdits articles. Les différents degrés de cuisson génèrent des courbes ou droites parallèles entre elles. Ainsi la droite d représente le temps de cuisson en fonction de la masse pour un article d'un gros diamètre et la droite e représente le temps de cuisson en fonction de la masse pour un article présentant un petit diamètre. En fonction des résultats expérimentaux obtenus pour de la viande de boeuf et sachant qu'il existe trois degrés de cuisson distincts, il est indispensable d'imprimer trois échelles de valeurs 5 de poids différentes pour des articles de gros diamètre d'une part et des articles de petit diamètre d'autre part. L'utilisateur dispose donc d'un ensemble de six échelles de valeurs 5 de poids différentes pour la viande de boeuf. Par conséquent l'utilisateur commence par sélectionner la nature et la configuration des articles, ensuite il sélectionne le degré de cuisson désiré pour afficher finalement une échelle de valeur 5 de poids des articles dont chaque graduation correspond à une graduation temporelle de l'échelle des temps 7 figurant sur le dispositif de commande. L'utilisateur peut de cette manière procéder au réglage approprié de la durée de cuisson ou d'alimentation électrique d'éléments chauffants nécessaire à la cuisson.

La distinction faite entre des articles de gros et petit diamètre peut être entendue comme une distinction entre des articles de forme plutôt carrée et des articles de forme plutôt allongée.

Dans un procédé conforme à l'invention, l'échelle de valeurs 5 de poids comporte une référence ou une origine correspondant par exemple à 0,2 kg. La position de cette origine vis à vis de l'échelle des temps 7 dépend de la nature des articles et du degré de cuisson désiré. L'incrément de l'échelle de valeurs 5 de poids correspondant de préférence à 0,1 kg s'étend sur une largeur ou un pas dépendant de la pente de la droite représentant le temps de cuisson en fonction du poids des articles, pour un diamètre donné desdits articles. En outre l'échelle de valeurs 5 de poids se trouve translatée sur le support mobile d'impression vis à vis de l'échelle des temps 7 lorsque le degré de cuisson désiré change. L'échelle de valeurs 5 peut également comporter un pas variable lorsqu'il existe une relation non linéaire entre le poids et le temps de cuisson de l'article.

Ainsi pour une masse m1 donnée d'un article, la durée de cuisson est donnée par un temps t1 obtenu par l'intermédiaire d'une droite établie en fonction du diamètre de l'article et du degré de cuisson. Lorsque l'utilisateur décide d'obtenir un degré de cuisson différent, le temps de cuisson t1 donné par la droite c passe à un temps t2 donné par la droite b pour la même masse m1 de l'article. La durée de cuisson se trouve donc augmentée pour passer par exemple d'un degré de cuisson saignant à un degré de cuisson correspondant à une cuisson à point. La masse m1 de l'article apparaissant dans l'échelle de valeurs 5 de poids affichée, se trouve donc en regard d'un temps de cuisson t2 plus élevé que le temps t1. L'utilisateur peut ainsi procéder à un réglage adéquat du temps de cuisson. L'affichage d'une échelle de valeurs 5 de poids des articles selon le procédé conforme à l'invention permet ainsi de sélectionner un programme de cuisson particulier correspondant à une échelle de valeurs 5 de poids particulière.

Selon une variante avantageuse du procédé conforme à l'invention, ce dernier consiste à sélectionner le poids des articles et à procéder au réglage de la durée de cuisson simultanément. Le procédé conforme à l'invention comporte également une étape qui consiste à sélectionner la température de cuisson en fonction d'une indication 6 affichée avec l'échelle de valeurs 5 de poids des articles. L'utilisateur est ainsi en mesure de procéder au réglage de la température de cuisson par l'intermédiaire du moyen de régulation thermique 8.

En outre le procédé conforme à l'invention consiste à commander le fonctionnement d'un four. Différents types de fours tels qu'un four à micro-ondes ou un four à cuisson sous vapeur peuvent évidemment être utilisés pour mettre en oeuvre le procédé conforme à la présente invention. De manière avantageuse, un tel procédé permet également de commander un four combiné comportant plusieurs modes de fonctionnement. A ce titre un organe de sélection supplémentaire 9 est agencé sur le dispositif conforme à la présente invention et permet à l'utilisateur de sélectionner le type de cuisson désiré.

Les figures 1d et 1e représentent des tableaux de temps de cuisson sans préchauffage de l'appareil de cuisson, pour l'exemple de la viande de boeuf, et correspondent respectivement à un article plutôt carré pour la figure 1d et à un article plutôt allongé pour la figure 1e. Il est également possible d'envisager une variante du procédé conforme à l'invention qui consiste à utiliser des étapes de cuisson supplémentaires. Une telle étape concerne par exemple une décongélation des articles. Un procédé conforme à la présente invention et comportant une étape de décongélation est facilement envisageable en augmentant par exemple le nombre de programmes associés à la cuisson et par conséquent en augmentant le nombre d'échelles de valeurs 5 de poids pour corriger de manière optimale les durées de cuisson.

Les exemples décrits plus en détail dans la présente description et notamment dans les figures 1d et le sont réalisées à l'aide d'un four particulier d'une capacité de quinze litres, mais il est évident que l'invention ne se limite pas à ce type particulier de four. Une capacité plus ou moins grande d'un four peut être compensée, de manière connue en soi, par l'agencement sur ce dernier d'éléments chauffants plus ou moins puissants et/ou bien en apportant une correction sur toutes les valeurs temporelles. La correction en question est aisément déterminable par expérimentation.

Le dispositif de commande pour mettre en oeuvre le procédé conforme à l'invention comporte, selon une variante additionnelle de ce dispositif de commande, des moyens électroniques associés à un micro-processeur. Le dispositif de commande conforme à l'invention comporte des moyens électroniques pour mémoriser, sélectionner et afficher des programmes de cuisson de manière à gérer la durée de fonctionnement d'un appareil de cuisson en fonction de sélections de paramètres représentatifs des articles alimentaires.

Les moyens électroniques comportent notamment un afficheur électronique, une mémoire avec des adresses correspondant à des programmes de cuisson ainsi que des touches de sélection permettant de sélectionner un programme de cuisson et de l'afficher sur l'afficheur électronique. Le dispositif comporte en outre des moyens de sélection du poids des articles ainsi qu'un moyen de régulation thermique.

Avantageusement le dispositif comporte le bâti 1 sur lequel sont indiqués les différents programmes de cuisson. Les programmes sont par exemple énumérés de la façon suivante: boeuf carré saignant, boeuf carré à point, boeuf carré bien cuit, boeuf allongé saignant, boeuf allongé à point, boeuf allongé bien cuit, agneau avec os saignant, agneau avec os bien cuit, agneau sans os saignant, agneau sans os bien cuit, porc bien cuit, poulet bien cuit, veau allongé bien cuit, veau carré bien cuit. Selon une autre variante de réalisation du dispositif conforme à l'invention, il comporte un moyen électronique pour faire dérouler l'ensemble des programmes dans l'afficheur électronique lorsque l'utilisateur est amené à sélectionner l'un des programmes. La sélection d'une valeur du poids des articles et/ou du réglage d'un thermostat peut être obtenue d'une manière identique.

Pour obtenir un fonctionnement préférentiel mais non limitatif, d'un four comportant un dispositif conforme à l'invention pour mettre en oeuvre le procédé conforme à la présente invention, l'utilisateur ouvre une porte du four et dépose dans ledit four l'article de cuisson constitué d'un morceau de viande de boeuf par exemple. L'utilisateur referme la porte du four et sélectionne à l'aide du premier organe de commande 2 une plage A du repère paramètré 3 correspondant à de la viande de boeuf et par conséquent à la nature de l'article.

A l'intérieur de cette même plage A, il sélectionne avec le premier organe de commande 2, une seconde plage B, moins étendue, qui correspond à une configuration particulière de l'article, lequel présente par exemple une forme plutôt allongée, appréciée visuellement.

L'utilisateur choisit ensuite, toujours avec le premier organe de commande 2, le degré de cuisson souhaité. Pour l'exemple de la viande de boeuf, l'utilisateur peut choisir entre trois positions pour le premier organe de commande 2 dans la seconde plage B, correspondant aux désignations : saignant, à point et bien cuit.

L'utilisateur sélectionne par exemple une cuisson saignante. La démarche de l'utilisateur peur être obtenue de manière immédiate lorsque ce dernier repère la position du premier organe de commande 2 correspondant aux paramètres de cuisson de l'article. La sélection du programme de cuisson est immédiate et les différentes étape de sélection ne sont pas apparentes.Il actionne ensuite le deuxième organe de commande 4 pour déplacer le repère 14 sur l'échelle de valeur 5 de poids affichée dans le moyen d'affichage 5b, de manière à positionner ledit repère 14 en face de la graduation correspondant au poids du morceau de viande.

Ainsi l'utilisateur sélectionne, à l'aide du premier l'organe de commande 2, un programme correspondant à une combinaison de trois facteurs constitués par la nature, la configuration et l'état final qui s'appliquent à la cuisson envisagée. L'état final doit être entendu comme le degré de cuisson des articles.

La démarche de l'utilisateur se limite donc à sélectionner avec le premier organe de commande 2 l'un des programmes de cuisson figurant parmi les programmes de l'ensemble N du sélecteur de programme constituant le repère paramètré 3.

Selon une variante de réalisation préférentielle du dispositif conforme à l'invention, le réglage de la minuterie 20 est obtenu automatiquement en positionnant convenablement le repère 14 sur la position correspondant au poids de l'article.

L'utilisateur procède à la suite des opérations précédentes au réglage de la température de cuisson avec le moyen de réglage 8, en fonction de l'indication 6 apparaissant dans le moyen d'affichage 5b avec l'échelle de valeurs 5.

L'utilisateur sélectionne ensuite le mode de fonctionnement du four le plus avantageux pour la viande à l'aide de l'organe de sélection supplémentaire 9, et commande la mise en marche du four. La cuisson est ainsi programmée avec une durée optimale garantissant à l'utilisateur le résultat de cuisson escompté dans 95 % des cas environ.

## Revendications

1. Procédé pour déterminer la durée et la température de cuisson d'un article alimentaire, consistant à sélectionner des paramètres représentatifs de la nature de l'article et du degré de cuisson désiré et à utiliser un paramètre représentatif du poids de l'article, caractérisé en ce qu'il consiste à partir d'un ensemble (N) de courbes représentatives du temps de cuisson en fonction du poids de l'article, ledit ensemble (N) comportant des sous-ensembles de courbes associés à la nature, à la configuration et au degré de cuisson de l'article,
- à sélectionner à partir de l'ensemble (N) un premier sous-ensemble (x) de courbes relatives à la nature de l'article,
- à sélectionner à partir du premier sous-ensemble (x) un second sous-ensemble (y) de courbes relatives à la configuration de l'article,
- à sélectionner à partir du second sous-ensemble (y), la courbe (c) relative au degré de cuisson désiré,
- à déterminer la durée de cuisson par l'intermédiaire de la correspondance entre une valeur de poids et un temps, ladite correspondance étant donnée par la courbe (c) préalablement sélectionnée.

2. Procédé selon la revendication 1 caractérisé en ce qu'il consiste à matérialiser sur un support physique et à afficher une échelle de valeurs (5) de poids en regard d'une échelle de temps (7).

3. Procédé selon la revendication 1 ou 2 caractérisé en ce qu'il consiste à sélectionner le poids de l'article et à procéder au réglage de la durée de cuisson simultanément.

4. Procédé selon la revendication 2 ou 3 caractérisé en ce qu'il consiste à sélectionner la température de cuisson en fonction d'une indication (6) affichée avec l'échelle de valeurs (5) de poids de l'article.

5. Procédé selon l'une des revendications 1 à 4 caractérisé en ce qu'il consiste à sélectionner un paramètre de configuration correspondant à une comparaison entre deux valeurs dimensionnelles de l'article.

6. Procédé selon l'une des revendications 1 à 5 caractérisé en ce qu'il consiste à sélectionner un paramètre de configuration correspondant à une différence entre une valeur dimensionnelle de longueur et une valeur dimensionnelle d'épaisseur de l'article.

7. Procédé selon l'une des revendications 1 à 5 caractérisé en ce qu'il consiste à sélectionner un paramètre de configuration correspondant à un rapport entre une valeur dimensionnelle de longueur et une valeur dimensionnelle de diamètre de l'article.

8. Procédé selon la revendication 1 caractérisé en ce qu'il consiste :
- à sélectionner la nature de l'article parmi au moins des catégories correspondant à de la viande de boeuf, de porc, d'agneau, de poulet et de veau pour obtenir le premier sous-ensemble (x) de courbes,
- à sélectionner parmi ce premier sous-ensemble (x) de courbes le second sous-ensemble (y) formant un sous-groupe de courbes relatives à la configuration de l'article, ledit premier sous-ensemble (x) de courbes comportant des sous-groupes de courbes relatives à la configuration, lesquels correspondent au moins à des articles de forme plutôt carrée et à des articles de forme plutôt allongée,
- à sélectionner le degré de cuisson désiré parmi les degrés de cuisson correspondant à une cuisson saignante, à point et bien cuite pour obtenir la courbe (c) représentative de la durée de cuisson en fonction du poids de l'article,
- à procéder au réglage de la durée de cuisson en fonction du poids de l'article et de la courbe (c) sélectionnée.

9. Procédé selon la revendication 8 caractérisé en ce qu'il consiste à sélectionner un nombre (y) de courbes formant un sous-groupe de configuration tenant compte de la présence d'os dans l'article.

10. Dispositif de commande d'un appareil de cuisson d'articles alimentaires pour la mise en oeuvre du procédé conforme à l'une des revendications 1 à 9 comportant un premier organe de commande (2) pour sélectionner des paramètres représentatifs de la nature, du degré de cuisson désiré et d'un paramètre associé à la configuration des articles, un deuxième organe de commande (4), pour sélectionner le poids des articles d'une part, ledit deuxième organe de commande (4) étant associé à des moyens pour obtenir un réglage d'une minuterie (20) pilotant l'alimentation électrique d'éléments chauffants agencés dans l'appareil de cuisson d'autre part, ledit dispositif comportant également un moyen d'affichage (5b) d'informations relatives aux paramètres sélectionnés des articles.

11. Dispositif selon la revendication 10 caractérisé en ce qu'il est constitué d'un bâti (1) sur lequel figure un repère paramétré (3) présentant des informations sur la nature, la configuration et le degré de cuisson optimal des articles, d'un support mobile sur lequel sont imprimées des échelles de valeurs (5) de poids, l'une desdites échelles de valeurs (5) étant sélectionnée par le premier organe de commande (2) et affichée par le moyen d'affichage (5b).

12. Dispositif selon la revendication 11 caractérisé en ce qu'il comporte un repère (14) dont le déplacement sur l'échelle de valeurs (5) et le réglage de la minuterie (20) sont effectués simultanément avec le deuxième organe de commande (4) par l'intermédiaire de moyens mécaniques de transmission.

13. Dispositif selon la revendication 12 caractérisé en ce qu'il comporte des moyens électroniques pour mémoriser, sélectionner et afficher des programmes de cuisson de manière à gérer la durée de fonctionnement d'un appareil de cuisson en fonction de sélections de paramètres représentatifs des articles alimentaires.

14. Procédé selon la revendication 1 caractérisé en ce qu'il consiste à déterminer des durées de cuisson pour des articles alimentaires de patisserie.

15. Four incorporant un dispositif de commande selon l'une des revendications 10 à 13 destiné à mettre en oeuvre le procédé conforme à l'une des revendications 1 à 9.

## Claims

1. A method of determining the cooking time and the cooking temperature for a food item, the method consisting in selecting parameters representative of the type of the item and of the desired degree of cooking, and in using a parameter representative of the weight of the item, said method being characterized in that, on the basis of a set (N) of curves representative of cooking time as a function of the weight of the item, with said set (N) comprising subsets of curves associated with the type, the configuration, and the degree of cooking of the item, said method consists in:
selecting from the set (N) a first subset (x) of curves relative to the type of the item;
selecting from the first subset (x) a second subset (y) of curves relating to the configuration of the item;
selecting from the second subset (y), the curve (c) relating to the desired degree of cooking; and
determining the cooking time by means of the correspondence between a weight value and a time, said correspondence being given by the previously selected curve (c).

2. A method according to claim 1, characterized in that it consists in constituting on a physical support and displaying a scale of weight values (5) facing a scale of times (7).

3. A method according to claim 1 or 2, characterized in that it consists in selecting the weight of the item, and in setting the cooking time simultaneously.

4. A method according to claim 2 or 3, characterized in that it consists in selecting the cooking temperature as a function of an indication (6) displayed with the scale of weight values (5) for the item.

5. A method according to any one of claims 1 to 4, characterized in that it consists in selecting a configuration parameter corresponding to a comparison between two dimensional values of the item.

6. A method according to any one of claims 1 to 5, characterized in that it consists in selecting a configuration parameter corresponding to a difference between a length dimensional value and a thickness dimensional value of the item.

7. A method according to any one of claims 1 to 5, characterized in that it consists in selecting a configuration parameter corresponding to a ratio between a length dimensional value and a diameter dimensional value of the item.

8. A method according to claim 1, characterized in that it consists in:
selecting the type of the item from at least categories corresponding to beef, pork, lamb, chicken, and veal, to obtain the first subset (x) of curves;
selecting from the first subset (x) of curves the second subset (y) forming a sub-group of curves relating to the configuration of the item, said first subset (x) of curves comprising sub-groups of curves relating to configuration, which curves correspond at least to items that are squarish in shape and to items that are longish;
selecting the desired degree of cooking from the degrees of cooking corresponding to "rare", "medium", and "well-done" cooking to obtain the curve (c) representative of cooking time as a function of the weight of the item; and
setting the cooking time as a function of the weight of the item and of the selected curve (c).

9. A method according to claim 8, characterized in that it consists in selecting a number (y) of curves forming a configuration sub-group taking into account the presence of bone in the item.

10. Apparatus for controlling equipment for cooking food items, the apparatus serving to implement the method according to any one of claims 1 to 9 and including a first control member (2) for selecting parameters representative of the type, and of the desired degree of cooking, and a parameter associated with the configuration of an item, a second control member (4) for selecting the weight of the item, said second control member (4) being associated with means for setting a timer (20) controlling the electric power supply to heater elements provided in the cooking equipment, said apparatus also including display means (5b) for displaying information relating to the selected parameters of the items.

11. Apparatus according to claim 10, characterized in that it is constituted by a frame (1) on which a parameterized selection chart (3) appears giving information on the types, configurations, and optimum degrees of cooking of the items, and by a moving support on which scales of weight values (5) are printed, one of said scales of values (5) being selected by the first control member (2) and being displayed by the display means (5b).

12. Apparatus according to claim 11, characterized in that it includes a cursor (14) which is displaced on the scale of values (5) simultaneously with setting of the timer (20) using the second control member (4) by means of mechanical transmission means.

13. Apparatus according to claim 12, characterize in that it includes electronic means for storing, selecting, and displaying cooking programs so as to manage the operating time of cooking equipment as a function of selections of parameters representative of the food items.

14. A method according to claim 1, characterized in that it consists in determining the cooking times for cake and pastry food items.

15. An oven incorporating control apparatus according to any one of claims 10 to 13, serving to implement the method according to any one of claims 1 to 9.

## Patentansprüche

1. Verfahren zur Bestimmung der Gardauer und der Gartemperatur eines Nahrungsmittels, bestehend aus der Auswahl von Parametern, die für die Art des Nahrungsmittels und den gewünschten Grad des Garens repräsentativ sind, und aus der Verwendung eines Parameters, der für das Gewicht des Nahrungsmittels repräsentativ ist, dadurch gekennzeichnet, daß es darin besteht, ausgehend von einer Gruppe (N) von Kurven, die für die Garzeit in Abhängigkeit von dem Gewicht des Nahrungsmittels repräsentativ sind, wobei die Gruppe (N) Untergruppen von Kurven enthält, die der Art, der Gestalt und dem Gargrad des Nahrungsmittels zugeordnet sind,
- ausgehend von der Gruppe (N) eine erste Untergruppe (x) von Kurven auszuwählen, die sich auf die Art des Nahrungsmittels beziehen,
- ausgehend von der ersten Untergruppe (x) eine zweite Untergruppe (y) von Kurven auszuwählen, die sich auf die Gestalt des Nahrungsmittels beziehen,
- ausgehend von der zweiten Untergruppe (y) die Kurve (c) auszuwählen, die sich auf den gewünschten Gargrad bezieht,
- die Garzeit mittels der Beziehung zwischen einem Gewichtswert und einer Zeit zu bestimmen, wobei die Beziehung durch die vorher ausgewählte Kurve (c) gegeben ist.

2. Verfahren nach Anspruch 1, dadurch gekennzeichnet, daß es darin besteht, auf einem physischen Träger eine Gewichtswerteskala (5) zu schaffen und gegenüber einer Zeitskala (7) anzuzeigen.

3. Verfahren nach Anspruch 1 oder Anspruch 2, dadurch gekennzeichnet, daß es darin besteht, das Gewicht des Nahrungsmittels auszuwählen, sowie darin, gleichzeitig eine Einstellung der Gardauer vorzunehmen.

4. Verfahren nach Anspruch 2 oder Anspruch 3, dadurch gekennzeichnet, daß es darin besteht, die Gartemperatur in Abhängigkeit von einer Anzeige (6) auszuwählen, die mit der Skala (5) der Gewichtswerte des Nahrungsmittels dargestellt wird.

5. Verfahren nach einem der Ansprüche 1 bis 4, dadurch gekennzeichnet, daß es darin besteht, einen Gestalts-Parameter auszuwählen, der einem Vergleich zwischen zwei Abmessungswerten des Nahrungsmittels entspricht.

6. Verfahren nach einem der Ansprüche 1 bis 5, dadurch gekennzeichnet, daß es darin besteht, einen Gestalts-Parameter auszuwählen, der einer Differenz zwischen einem Längen-Abmessungswert und einem Dicken-Abmessungswert des Nahrungsmittels entspricht.

7. Verfahren nach einem der Ansprüche 1 bis 5, dadurch gekennzeichnet, daß es darin besteht, einen Gestalts-Parameter auszuwählen, der einem Verhältnis zwischen einem Längen-Abmessungswert und einem Durchmesser-Abmessungswert des Nahrungsmittels entspricht.

8. Verfahren nach Anspruch 1, dadurch gekennzeichnet, daß es darin besteht:
- die Art des Nahrungsmittels aus wenigstens solchen Kategorien auszuwählen, die Rindfleisch, Schweinefleisch, Lammfleisch, Hühnerfleisch und Kalbfleisch entsprechen, um die erste Untergruppe (x) von Kurven zu erhalten,
- aus dieser ersten Untergruppe (x) von Kurven die zweite Untergruppe (y) auszuwählen, die eine Untergruppe von Kurven bildet, die sich auf die Gestalt des Nahrungsmittels bezieht, wobei die erste Untergruppe (x) von Kurven sich auf die Gestalt beziehende Untergruppen von Kurven enthält, die wenigstens Nahrungsmitteln mit eher quadratischer Form sowie Nahrungsmitteln mit eher langgestreckter Form entsprechen,
- den gewünschten Gargrad unter den Gargraden auszuwählen, die einem teilweisen Garen, einem mittleren Garen oder einem vollständigen Garen entsprechen, um die Kurve (c) zu erhalten, die für die Gardauer in Abhängigkeit vom Gewicht des Nahrungsmittels repräsentativ ist,
- die Einstellung der Gardauer in Abhängigkeit von dem Gewicht des Nahrungsmittels und der gewählten Kurve (c) auszuführen.

9. Verfahren nach Anspruch 8, dadurch gekennzeichnet, daß es darin besteht, eine Anzahl (y) von Kurven auszuwählen, die eine Gestalts-Untergruppe bilden, welche das Vorhandensein von Knochen in dem Nahrungsmittel berücksichtigt.

10. Steuervorrichtung für ein Gargerät für Nahrungsmittel zum Ausführen des Verfahrens nach einem der Ansprüche 1 bis 9, mit einem ersten Steuerorgan (2), um für die Art und den gewünschten Gargrad repräsentative Parameter und einen Parameter auszuwählen, welcher der Gestalt der Nahrungsmittel zugeordnet ist, einem zweiten Steuerorgan (4), um zum einen das Gewicht des Nahrungsmittels auszuwählen, wobei das zweite Steuerorgan (4) zum anderen Mitteln zugeordnet ist, um eine Einstellung eines Zeitgebers (20) zu erzielen, der die elektrische Versorgung von Heizelementen steuert, die in dem Gargerät angeordnet sind, wobei die Vorrichtung auch ein Anzeigemittel (5b) für Informationen aufweist, die sich auf die gewählten Parameter der Nahrungsmittel beziehen.

11. Vorrichtung nach Anspruch 10, dadurch gekennzeichnet, daß sie aus einem Gehäuse (1) besteht, an welchem eine auf Parameter bezogene Markierung (3) angebracht ist, welche Informationen bezüglich der Art, der Gestalt und des optimalen Gargrades der Nahrungsmittel darstellt, sowie aus einem beweglichen Träger, auf den Gewichtswerteskalen (5) aufgedruckt sind, wobei eine der Gewichtswerteskalen (5) von dem ersten Steuerorgan (2) ausgewählt wird und von dem Anzeigemittel (5b) angezeigt wird.

12. Vorrichtung nach Anspruch 11, dadurch gekennzeichnet, daß sie eine Markierung (14) aufweist, deren Verstellung auf der Werteskala (5) gleichzeitig mit der Einstellung des Zeitgebers (20) von dem zweiten Steuerorgan (4) über mechanische Übertragungsmittel erzielt wird.

13. Vorrichtung nach Anspruch 12, dadurch gekennzeichnet, daß sie elektronische Mittel aufweist, um Garprogramme zu speichern, auszuwählen und anzuzeigen, damit die Betriebsdauer eines Gargerätes in Abhängigkeit von der Auswahl von Parametern, die für die Nahrungsmittel repräsentativ sind, verwaltet werden.

14. Verfahren nach Anspruch 1, dadurch gekennzeichnet, daß es darin besteht, Gardauern für Feinbackwaren zu bestimmen.

15. Ofen, der eine Steuervorrichtung nach einem der Ansprüche 10 bis 13 enthält und dafür vorgesehen ist, das Verfahren nach einem der Ansprüche 1 bis 9 auszuführen.
